# EUROPÄISCHE PATENTSCHRIFT

(11) **EP 1 890 134 B1**
(45) Veröffentlichungstag und Bekanntmachung des Hinweises auf die Patenterteilung: **01.09.2010**
(21) Anmeldenummer: 07002716.4
(22) Anmeldetag: 08.02.2007
(51) Int. Cl.: G01N 21/88, G01N 21/89

(54) **Überwachung der Qualität von gemusterten, insbesondere räumlich gekrümmten Oberflächen**
Quality surveillance of patterned, in particular spatially curvilinear surfaces
Contrôle de la qualité de surfaces à motifs, en particulier courbées dans l'espace

(30) Priorität: 17.08.2006 DE 102006038615
(43) Veröffentlichungstag der Anmeldung: 20.02.2008
(73) Patentinhaber: Massen Machine Vision Systems GmbH, 78467 Konstanz (DE)
(72) Erfinder: Detinkin, Igor, 78464 Konstanz (DE)
(74) Vertreter: Prinz & Partner

(56) Entgegenhaltungen:
- EP-A- 0 898 163
- WO-A-2004/063664
- WO-A-2004/065947
- DE-A1- 10 124 347
- US-A- 5 936 665

## Beschreibung

Die automatische Inspektion der Qualität von flachen und insbesondere von gekrümmten, gemusterten und geprägten Oberflächen wie beispielsweise Laminatböden, bedruckte Küchenfronten usw. erfordert neben der Erkennung ästhetischer Fehler wie Kontaminationen, Farbinstabilitäten, Dekorpapierversatz u.ä. auch die Erkennung von physikalischen Oberflächenfehlern wie Risse, Beulen, Aufplatzer, Kratzer und lokale Glanzfehler. Da die Produktionsgeschwindigkeiten dieser Anlagen immer höher werden, ist das menschliche Auge als Prüfmethode nicht mehr einsetzbar. Es besteht daher ein hohes technisches und wirtschaftliches Interesse an einem Verfahren und an einer Anordnung um gemusterte, flache und gekrümmte, glatte oder geprägte Oberflächen in der Produktionslinie auf die hauptsächlich im sogenannten Hellfeld oder Dunkelfeld unter gerichteter Beleuchtung sichtbaren physikalischen Oberflächendefekte hin zu inspizieren.

Für die Erkennung von ästhetischen Fehlern ist es z.B. aus "R.Massen: Qualität im Blick - Automatische Inspektion und Prozessüberwachung für die Fußboden- und die Möbelindustrie. Fachzeitschrift HOB Nr. 6/2006, Seite 32-35, Verlag AGT, Ludwigsburg, www.agt-verlag.de "für Laminatdielen bekannt, die sich auf einem Transportband bewegende Diele mit diffusem Weißlicht zu beleuchten und mit Hilfe einer senkrecht über der Diele angeordneten Farbzeilenkamera bildhaft abzutasten.

Die Erkennung von physikalischen Oberflächenfehlern verlangt hingegen eine Anordnung von Kamera und Beleuchtung in der sog. "Hellfeld" oder "Dunkelfeld" Anordnung. Hierbei wird die Oberfläche von einer gerichtet anstrahlenden Beleuchtungsquelle beleuchtet und eine der beiden folgenden alternativen Aufnahmepositionen für die Kamera eingestellt:
1. Hellfeld-Anordnung: Die Kamera erfasst das an der Oberfläche reflektierte Licht der Beleuchtungsquelle in spiegelnder Reflexion, d.h. der Einfallswinkel α1 der Beleuchtung und der Betrachtungswinkel α2 der Kamera sind in etwa gleich und zumindest annähernd symmetrisch zur Oberflächennormalen. Die fehlerfreie Oberfläche erscheint im Bild der Kamera hell. Fehler in der Oberfläche wie z.B. Kratzer oder Beulen lenken das Licht ab und verändern seine Helligkeit und erscheinen damit im Bild der Kamera als dunkle Stellen (Hellfeld-Anordnung α2 = α1).
2. Dunkelfeld-Anordnung: Die Kamera ist so positioniert, dass sie nicht die spiegelnde Reflexion der Beleuchtungsquelle erfasst, d.h. ihr Betrachtungswinkel ist leicht, um k Grad, verschieden vom Einfallswinkel der gerichteten Beleuchtung. Damit erscheint die fehlerfreie Oberfläche im Bild der Kamera dunkel. Fehler in der Oberfläche wie z.B. Kratzer oder Beulen lenken das Licht ab, so dass es zumindest teilweise in die Pupille der Kamera gelangt. Die Fehlerstellen erscheinen damit hell (Dunkelfeld-Anordnung α2 = α1+k).

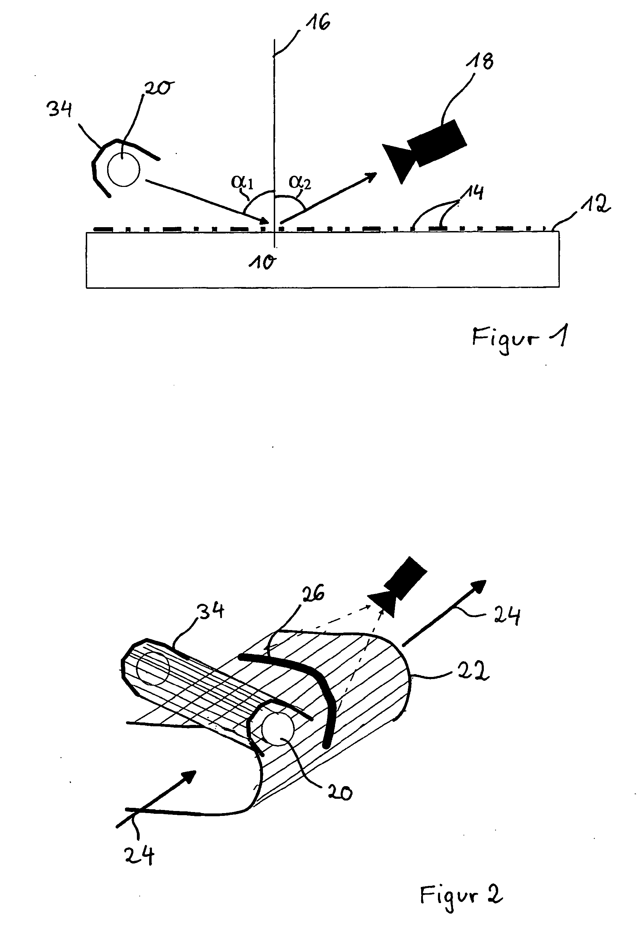

Figur 1 verdeutlicht eine Hellfeld-Anordnung anhand einer Skizze. Ein zu inspizierendes Produkt 10, beispielsweise eine Diele, weist eine Oberfläche 12 auf, die mit einem Muster 14 versehen ist und eine Oberflächennormale 16 hat. Eine Kamera 18 und eine Beleuchtungsquelle 20 mit einem Reflektor 34 sind symmetrisch zur Oberflächennormalen 16 angeordnet und die Winkel α1 und α2 ~ α1 werden so gewählt (bezogen auf die Oberflächennormale 16), dass die Kamera 18 weitgehend nur das an der Oberfläche 12 des farblich gemusterten Produktes 10 reflektierte Glanzlicht erfasst. Jede Verletzung der Oberfläche 12 durch Kratzer, Beulen usw. drückt sich in einer im Vergleich zur gesunden Oberfläche veränderten, im Kamerabild messbaren lokalen Helligkeit aus.

Figur 2 zeigt eine entsprechende Hellfeld-Anordnung aus dem Stand der Technik für den Fall der Inspektion einer Möbelkante 22. In Figur 2 wie in allen weiteren Figuren werden gleiche Bezugskennzeichen für einander entsprechende Gegenstände verwendet. Eine Beleuchtungsquelle 20 mit Reflektor 34 beleuchtet die Kante 22 quer zur durch Pfeile 24 angedeuteten Transportrichtung mit einem großen Einfallswinkel und erzeugt ein linienartiges Glanzbild 26. Eine Kamera 18 ist unter symmetrisch gleichem Betrachtungswinkel positioniert.

Die bekannte Hellfeld-Anordnung mit großen und gleichen Winkeln α1 und α2 erbringt den wesentlichen Vorteil, dass die aufgedruckte Musterung 14 der Oberfläche 12 selbst (z.B. durch farblich bedrucktes Dekorpapier bei Laminatdielen und Möbelfronten) im Kamerabild nicht mehr sichtbar ist und dadurch auch keine störenden Bildmuster erzeugt, welche sich den im Glanzbild sichtbaren, eigentlichen Oberflächenfehlern überlagern.

Diese dem Fachmann der Bildverarbeitung bekannte Anordnung verlangt relativ große Winkel α (typ. zwischen 75 und 90 Grad), um eine gute Unterdrückung der im Allgemeinen mehrfarbig bedruckten Muster des Dekorpapiers zu erreichen. Dieses Glanzbild enthält damit auch keine Farbinformationen mehr, sondern gibt lediglich das an der Oberfläche gespiegelte Licht der Beleuchtungsquelle wieder. Je größer die Winkel bezogen auf die Normale sind, desto stärker treten kleine Verletzungen der Oberfläche wie Risse, Beulen usw. im Glanzbild hervor. Es werden daher für solche Hellfeld-Abbildungen reine s/w Kameras eingesetzt.

Der Aufbau einer Dunkelfeld-Anordnung ist im Prinzip gleich, es werden lediglich die beiden Winkel α1 und α2 um einen Winkelversatz k verschieden gewählt, so dass bei einer unverletzten Oberfläche das an der Oberfläche reflektierte Licht der gerichteten Beleuchtung nicht in die Pupille der Kamera eintritt.

Infolge dieser Dualität von Hellfeld- und Dunkelfeldanordnung wird im weiteren als Beispiel immer nur eine Hellfeld-Anordnung beschreiben. Die Überführung des Erfindungsgedanken in eine Dunkelfeldanordnung ist trivial und dem Fachmann der Bildverarbeitung bekannt.

Die benötigte flache Beleuchtungs- und Aufnahmerichtung (bezogen auf die Oberflächenebene) zur Unterdrückung störender Einflüsse der gemusterten Oberfläche, ruft eine Reihe von praktischen Problemen und Beschränkungen insbesondere bei der automatischen Inspektion in der Produktionslinie hervor:
a) Bereits eine kleine, für die Qualität der Oberfläche unerhebliche räumliche Verformung der zu inspizierenden Oberfläche, wie z.B. die Schüsselung einer Laminatdiele, die drei-dimensionale Ausgestaltung von Möbelfronten (z.B. Küchenschranktüren mit 3-dimensionalen Verzierungen) erzeugen starke Inhomogenitäten im Glanzbild. Diese, keine Oberflächenfehler darstellenden räumlichen Verformungen modulieren das von der Kamera aufgenommene Glanzbild in seiner Amplitude in ähnlicher Weise wie die eigentlich interessierenden physikalischen Oberflächenfehler. Sie sind damit mit Methoden der Bildverarbeitung und Mustererkennung kaum noch von den echten Fehlern zu unterscheiden.
b) Vibrationen der sich durch die Inspektionsanlage hindurch bewegenden Oberfläche durch den Rollentransport können ebenfalls störende, z.T. sehr hochfrequente Muster im Glanzbild erzeugen, welche bei einer automatischen Auswertung zu zahlreichen Fehlmeldungen führen, da diese ebenfalls kaum von echten Oberflächenfehlern unterschieden werden können.
c) Sind die zu inspizierenden Oberflächen durch eine Prägung strukturiert, so wird diese das Glanzlicht ebenfalls stark störend modulieren und damit die Unterscheidung zwischen Prägung und echtem physikalischen Oberflächenfehler erschweren.
d) Bei räumlich stark gekrümmten Flächen wie z.B. der in Figur 2 gezeigten geschwungenen Möbelkante 22 ist es prinzipiell unmöglich, mit Hilfe der Zeilenkamera 18 und der linienartigen Beleuchtung 20 ein linienhaftes, von der Zeilenkamera erfassbares Glanzbild 26 zu erzeugen, bei welchem für jeden Bildpunkt des Zeilensensors die Hellfeld-Bedingung α2 ~ α1 gilt. Lediglich an einem einzigen Punkt stimmt die Hellfeldbedingung "Einfallswinkel = Betrachtungswinkel" überein. Für alle anderen Blickwinkel ist bei einem linienhaften Bildsensor, einer linienhaften Beleuchtung und einer räumlich gekrümmten Kante diese Hellfeld-Bedingung nicht zu erreichen. Damit überlagert sich das farbliche Muster wieder störend den Bilddaten und eine Auswertung wird erschwert oder sogar unmöglich.

Es lässt sich zwar für jede Krümmungsform eine geeignete räumliche Krümmung der Linienbeleuchtung berechnen, welche für alle Bildpunkte des Zeilensensors zumindest näherungsweise die Hellfeld-Bedingung α2 ~ α1 erfüllt. Dies ist aber für eine Anlage, welche Oberflächen mit unterschiedliche Krümmungen erfassen muss, keine praktikable Lösung.

Insbesondere ist die Krümmung der Beleuchtungslinie keine Lösung, wenn die Krümmung vorab nicht bekannt ist, wie es z.B. bei einer ungewollten Schüsselung von Laminatdielen der Fall ist, da bei unbekannter Krümmung zwangsläufig keine geeignet gekrümmte Linienbeleuchtung eingesetzt werden kann. Gekrümmte Linienbeleuchtungen sind außerdem nur mit erheblichem konstruktiven Aufwand zu erreichen.

Es ist aus der EP 0 898163 B1 "Method and apparatus for automatic inspection of moving surfaces" ein in der Fachliteratur als "fotometrisches Stereo" bezeichnetes Verfahren bekannt, welches durch mehrere, unter unterschiedlichen Winkeln aufgenommene Bilder und einer Verrechnung dieser einzelnen Bilder die Effekte der störenden Musterung von den eigentlich interessierenden Glanzbildern trennt. Diese Verfahren erfordern aber entweder mehrere spektral getrennte Beleuchtungen und spektral selektiv aufnehmende Kameras oder mehrere, zu verschiedenen, möglichst dicht aufeinanderfolgenden Zeitpunkten (im sog. Zeitmultiplex) erstellte Bilder, welche jeweils bei einer anderen Winkelbeziehung zwischen Kamera und Beleuchtung aufgenommen wurden. Das spektral selektive Verfahren erfordert mehrere spektral unterschiedliche Beleuchtungen und spektral selektive Kameras. Im einfachsten Fall können dies eine rote, eine grüne und eine blaue Beleuchtung sein und eine RGB Farbkamera.

Bei den im Zeitmultiplex gewonnenen Bildern kann, bei einem sich in der Produktionslinie bewegenden Produkt, nacheinander nicht die gleiche Stelle der Oberfläche erfasst werden. Es muss daher mit sehr schnellen Beleuchtungswechseln und entsprechend schnellen Kameras gearbeitet werden um wenigstens näherungsweise alle Bilder von der gleichen Stelle der Oberfläche zu gewinnen.

Damit ist auch das fotometrische Stereo nicht geeignet, eine kostengünstige Lösung für die gestellte Aufgabe zu liefern, nämlich eine Oberflächeninspektion mit Hilfe von Zeilenkameras im Hell- oder Dunkelfeld bei einer gerichteten Beleuchtung insbesondere an räumlich gekrümmten und schnell bewegten gemusterten Oberflächen durchzuführen.

Eine weitere Schwierigkeit, physikalische Oberflächenfehler einer gekrümmten Oberfläche mit einem Zeilensensor im Hellfeld zu erfassen besteht darin, dass solche Oberflächen oft zusätzlich zu dem gedruckten Muster durch feinkörnige drei-dimensionale Prägungen strukturiert werden. Bei einer üblichen Heilfeld-Anordnung unter einem flachen Beleuchtungs- und Aufnahmewinkel (bezogen auf die Oberflächenebene) ist diese Prägung aber so stark sichtbar, dass sie Oberflächenfehler überdeckt; bei einer Dunkelfeldanordnung wird die Prägung ebenfalls teilweise das gerichtete Licht in die Pupille der Kamera ablenken und dort Helligkeitsmuster erzeugen, welche sich störend den eigentlich interessierenden, durch Oberflächendefekte verursachten Helligkeitsmuster überlagern.

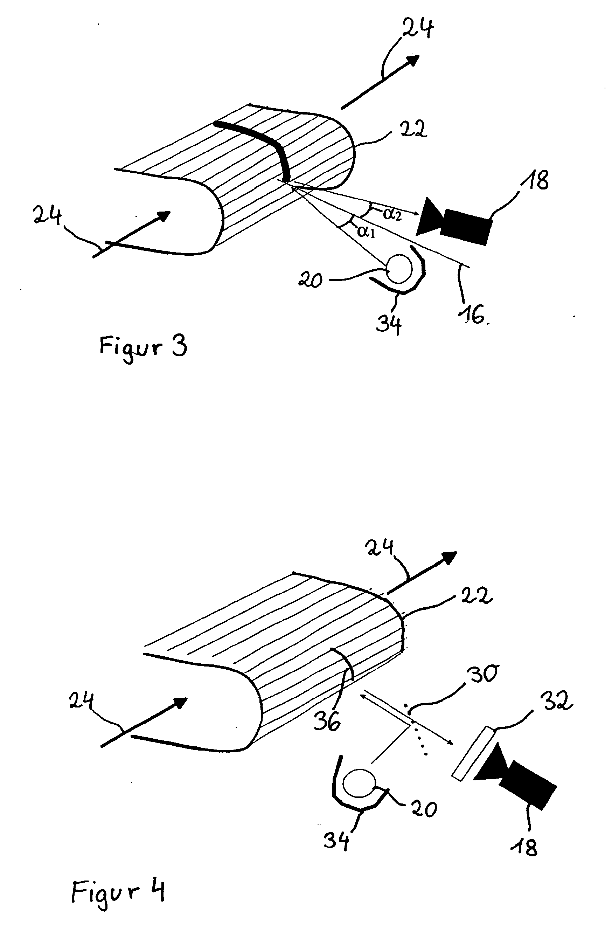

Der Einfluss der räumlichen Krümmung auf das im Hellfeld mit einer Zeilenkamera aufgenommene Glanzbild wäre zu beseitigen, wenn die Hellfeldbedingung wie in Figur 3 gezeigt, mit sehr kleinen Winkeln α1~α2 realisiert würde. In Figur 3 ist wiederum wie in Figur 2 eine Möbelkante 22, die in einer Bewegungsrichtung 24 transportiert wird, und die von einer Beleuchtungsquelle 20 beleuchtet und von einer Kamera 18 betrachtet wird, dargestellt. Bei einer fast senkrecht zur Oberfläche beobachtenden, quer zur Transportbewegung der Oberfläche angeordneten Zeilenkamera 18 und einer entsprechend symmetrisch zur Oberflächennormale 16 der Kante angeordneten ebenfalls quer zur Transportbewegung angeordneten gerichtet strahlenden Linienbeleuchtung 20 würden beispielsweise eine unerwünschte Schüsselung einer Diele bzw. 3D-Strukturen ein Wegwandern des linienhaften Glanzbildes aus dem Bildfeld des Zeilensensors in wesentlich geringerem Maße hervorrufen, so dass die Hellfeld-Bedingung immer annähernd erfüllt ist. Auch eine evtl. vorhandene Prägung würde bei einer Beleuchtung und Betrachtung zumindest näherungsweise in Richtung der Oberflächennormalen 16 keine störende Modulation in dem Glanzbild hervorrufen, welche die Erkennung des physikalischen Oberflächenfehlers störend überlagern könnte.

Eine gerichtete Beleuchtung und Betrachtung einer Oberfläche in Richtung Oberflächennormale erzeugt damit ein von der Raumkrümmung und einer evtl. vorhandenen Prägung weitgehend ungestörtes Glanzbild, abhängig von den Krümmungsradien. Allerdings sind infolge der fast senkrechten Beobachtung und Beleuchtung die farblichen Musterungen 14 der Oberfläche ebenfalls sehr stark als hell/dunkel Strukturen sichtbar und überlagern somit das Glanzbild, so dass nicht zwischen der normalen bedruckten Musterung und einem Fehler wie Kratzer, Aufplatzer usw. in der spiegelnden Oberfläche unterschieden werden kann.

Eine Unterdrückung des Einflusses von optisch sichtbaren Farbmustern ist in der Bildverarbeitung bekannt durch Anwendung von NIR Licht (near infrared), d.h. von optischer Strahlung großer Wellenlänge. Wie z.B. in der Fachzeitschrift "Heckenkamp: Inspect, Ausgabe Juni 2006, Nr. 2, 7. Jahrgang, Seite 14 bis 17, GIT Verlag (www.gitverlag.com) am Beispiel von bedruckten Textilien gezeigt wird, können bei einer Beleuchtung mit nahem Infrarot viele der für das menschliche Auge sichtbaren Farbpigmente im Bild einer NIR-empfindlichen Kamera unterdrückt werden. Das gilt aber nicht für die meistens karbonhaltigen schwarzen Pigmente, da Karbon ein guter Absorber für alle Wellenlängen im sichtbaren Bereich bis zum NIR Bereich ist. Gerade Holzmaserungen werden oft mit solchen dunklen Strukturen aus karbonhaltigen Pigmenten bedruckt und würden daher bei einer Anordnung nach Figur 3 auch bei Verwendung von NIR-Licht stark sichtbar bleiben und sich dem Glanzbild weiterhin störend überlagern.

WO 2004/063664 A1 offenbart ein optisches Verfahren zur Oberflächenkontrolle bei schnell bewegten Materialbahnen. Es werden zwei Lichtquellen verwendet, eine erste Lichtquelle, der ein erster Lichtsensor zugeordnet ist, und die gerichtetes, paralleles Licht abstrahlt, sowie eine zweite Lichtquelle, der ein zweiter Lichtsensor zugeordnet ist, und die diffuses Licht abstrahlt. Durch eine Korrelation der über die zwei Beleuchtungsarten gewonnenen Daten in einer elektronischen Auswertungseinheit können in zuverlässiger Weise eine Vielzahl von Fehlern erkannt werden. Beleuchtungswinkel und Beleuchtungswellenlänge sowie Beobachtungswinkel und Beobachtungswellenlänge sollten an die jeweilige Messaufgabe angepasst werden, konkrete Lehren hierzu enthält die WO 2004/063664 A1 nicht.

US 5,936,665 offenbart ein Verfahren zur optischen Oberflächeninspektion von hell- oder dunkelfarbigen Stoffbahnen zum Erkennen von Knötchenbildung. Es wird eine gerichtete UV-Beleuchtung, kombiniert mit einer CCD-Grauskalen-Kamera, verwendet, wobei die Knötchen durch eine Beobachtung nahezu parallel zur Oberfläche vor einem Hintergrund sichtbar gemacht werden.

DE 101 24 347 A1 offenbart ein Verfahren zum Erkennen von Mustern auf der Oberfläche eines Gegenstandes, wobei diese Muster dreidimensionale Strukturen, Farbflächen und Flächentexturen umfassen können.

Diese beschriebenen Schwierigkeiten führen dazu, dass es bis heute keine einfache und kostengünstige Lösung gibt, farblich oder s/w gemusterte, glatte und geprägte, flache und insbesondere räumlich gekrümmte Oberflächen unter gerichteter linienförmiger Beleuchtung im Hell- oder Dunkelfeld mit Hilfe von einfachen Zeilenkameras zu inspizieren. Insbesondere für die ästhetisch anspruchsvollen, farblich gemusterten und räumlich gekrümmten Flächen der Möbelindustrie wie Möbelkanten, profilierte Türfronten usw. fehlt ein einfaches Inspektionsverfahren, um in der Produktionslinie die physikalische Qualität der Vielzahl unterschiedlicher Oberflächen unter gerichteter Beleuchtung unabhängig von dem speziellen räumlichen Verlauf der Krümmung, der speziellen Farbmusterung und von einer ggfls. vorhandenen Prägung zu inspizieren.

Die Erfindung stellt ein Verfahren gemäß Anspruch 1 zur Inspektion farblich gemusterter bewegter Oberflächen unter Hell- und/oder Dunkelfeldbedingung zur Verfügung, wobei die Oberfläche durch mindestens eine gerichtete, linienförmige Beleuchtungsquelle mit kurzwelliger optischer Strahlung mit Wellenlängen unter 400 nm beleuchtet wird; und eine Zeilenkamera, die nur in dem kurzwelligen optischen Strahlenbereich empfindlich ist, den beleuchteten Oberflächenbereich unter Hell- oder Dunkelfeldbedingung abtastet.

Das Verfahren ist dadurch gekennzeichnet, dass die Oberfläche flache und/oder räumlich gekrümmte Bereiche jeweils mit oder ohne geprägte Strukturen aufweist und für eine Hellfeldbedingung ein Winkel α₂ zwischen der optischen Achse der Zeilenkamera und der Oberflächennormalen des beleuchteten Oberflächenbereichs einen Wert von 0° oder zwischen 1 und 5° hat, und ein Winkel α₁ zwischen der optischen Achse der gerichteten, linienförmigen Beleuchtungsquelle und der Oberflächennormalen des beleuchteten Oberflächenbereichs gleich und symmetrisch dem Winkel α₂ ist, oder für eine Dunkelfeldbedingung ein Winkel α₂ zwischen der optischen Achse der Zeilenkamera und der Oberflächennormalen des beleuchteten Oberflächenbereichs oder ein Winkel α₁ zwischen der optischen Achse der gerichteten, linienförmigen Beleuchtungsquelle und der Oberflächennormalen des beleuchteten Oberflächenbereichs einen Wert von annähernd 0° hat, und der jeweils andere Winkel α₁ bzw. α₂ um einen Winkelversatz k verschieden ist..

Untersuchungen des Erfinders haben gezeigt, dass das Reflektionsverhalten üblicher Druckpigmente mit kürzer werdender Wellenlänge, d.h. im ultravioletten Bereich, immer unabhängiger von den im Weißlicht sichtbaren Farbreflektionen wird und dass dies auch für schwarze, karbonhaltige Farben gilt. Bei Betrachtung einer im UV-Bereich beleuchteten mehrfarbig bedruckten Oberfläche mit einer ebenfalls nur in diesem kurzwelligen Anregungsbereich empfindlichen Kamera erscheinen alle Farbmusterungen inklusive der schwarzen Farben gleichermaßen grau oder zumindest mit einem nur sehr geringen Kontrast, und dies auch bei für den Menschen sehr kontrastreich wirkenden Farbmusterungen wie Holzstrukturen, imitierte Natursteinmuster u.ä.

Geeignete linienförmige Beleuchtungsquellen sind als Fluoreszenzröhren oder LED mit einer spektralen Emission im Bereich von ca. 360 bis ca. 400 nm verfügbar. Geeignete in diesem Wellenlängenbereich noch empfindliche Zeilenkameras sind beispielsweise CCD- Sensoren mit einer ausgewählten, in diesem Bereich noch arbeitenden Optik, wobei der Bereich des sichtbaren Lichtes und der NIR-Bereich durch ein vorgeschaltetes optisches Sperrfilter mit einem Durchlassbereich von ca. 350 bis 400 nm unterdrückt wird.

In einer bevorzugten Ausführungsform weist die Oberfläche eine geprägte Struktur oder räumlich gekrümmte Bereiche auf und die optische Achse der gerichteten, linienförmigen Beleuchtungsquelle steht im wesentlichen senkrecht auf der Oberfläche und schließt mit der optischen Achse der Zeilenkamera einen sehr kleinen Winkel ein. Das kann bevorzugterweise realisiert werden, indem die linienförmige Beleuchtung oder die Zeilenkamera autokollimatorisch eingespiegelt werden. Durch die Verwendung von kurzwelliger optischer Strahlung muß bei der Einstellung der Hellfeld-/Dunkelfeldbedingung keine Rücksicht mehr auf ein vorhandenes Muster genommen werden und die Oberfläche kann unter einem annähernd senkrechten Winkel beleuchtet werden, so daß räumliche Strukturen der Oberfläche keine Fehler im Glanzbild mehr auslösen.

Die Erfindung stellt außerdem eine Anordnung gemäß Anspruch 8 bereit zur Inspektion farblich gemusterter bewegter Oberflächen unter Hell- und/oder Dunkelfeldbedingung, umfassend eine gerichtete, linienförmige Beleuchtungsquelle mit kurzwelliger optischer Strahlung mit Wellenlängen unter 400 nm zur Beleuchtung der bewegten Oberfläche, wobei die Beleuchtungsquelle quer zur Bewegungsrichtung angeordnet ist, und eine Zeilenkamera, die nur in dem kurzwelligen optischen Strahlenbereich der Beleuchtungsquelle empfindlich ist, zur Abtastung des beleuchteten Oberflächenbereichs unter Hell- oder Dunkelfeldbedingung. Eine Recheneinheit empfängt die Bildsignale der Zeilenkamera und wertet sie auf Oberflächenfehler aus.

Die Anordnung ist dadurch gekennzeichnet, dass die Oberfläche (12) flache und/oder räumlich gekrümmte Bereiche jeweils mit oder ohne geprägte Strukturen aufweist und für eine Hellfeldbedingung die Zeilenkamera so angeordnet ist, dass ein Winkel α₂ zwischen der optischen Achse der Zeilenkamera und der Oberflächennormalen des beleuchteten Oberflächenbereichs einen Wert von 0° oder zwischen 1° und 5° hat, und die gerichtete, linienförmige Beleuchtungsquelle so angeordnet ist, dass ein Winkel α₁ zwischen der optischen Achse der gerichteten, linienförmigen Beleuchtungsquelle und der Oberflächennormalen des beleuchteten Oberflächenbereichs gleich und symmetrisch dem Winkel α₂ ist, oder für eine Dunkelfeldbedingung die Zeilenkamera und die Beleuchtungsquelle so angeordnet sind, dass ein Winkel α₂ zwischen der optischen Achse der Zeilenkamera und der Oberflächennormalen des beleuchteten Oberflächenbereichs oder ein Winkel α₁ zwischen der optischen Achse der gerichteten, linienförmigen Beleuchtungsquelle und der Oberflächennormalen des beleuchteten Oberflächenbereichs einen Wert von annähernd 0° hat, und der jeweils andere Winkel α₁ bzw. α₂ um einen Winkelversatz k verschieden ist.

Weitere Ausführungsformen sind in den Unteransprüchen enthalten und die Vorteile der Erfindung werden bei der nachstehenden Beschreibung einer bevorzugten Ausführungsform anhand der Figuren klar werden, in denen zeigen
Figur 1: eine Hellfeld-Anordnung gemäß dem Stand der Technik für eine glatte, gemusterte Oberfläche mit großem Einfalls- und Betrachtungswinkel;
Figur 2: eine Hellfeld-Anordnung gemäß dem Stand der Technik für eine gekrümmte Oberfläche, insbesondere eine Möbelkante;
Figur 3: eine Hellfeld-Anordnung für eine gekrümmte Oberfläche, insbesondere eine Möbelkante, mit annähernd senkrechtem Beleuchtungseinfall;
Figur 4: eine autokollimatorische Anordnung von kurzwelliger Linienbeleuchtung und Zeilensensor;
Figuren 5a, 5b: eine autokollimatorische Hellfeld-Anordnung mit einer ungestörten und einer fehlerhaften Oberfläche;
Figur 6: eine Hellfeld-Anordnung für eine glatte, gemusterte Oberfläche mit kleinem Einfalls- und Betrachtungswinkel.

Der Erfindungsgedanke wird beispielhaft anhand der Inspektion in der Produktionslinie von räumlich geschwungenen Kanten von farblich gemusterten Möbelplatten auf Oberflächenfehler wie Risse und Aufplatzer verdeutlicht. Wir beschränken uns hierbei auf die Hellfeld-Anordnung, der die Dunkelfeld-Anordnung wie weiter oben bereits erläutert entspricht.

In Figur 4 wird eine farblich gemusterte Möbelkante 22 in eine Transportrichtung bewegt, die durch zwei Pfeile 24 angedeutet ist. Die Beförderung erfolgt mit in Produktionslinien üblichen Mitteln, die hier nicht weiter beschrieben sind. Dabei wird die Möbelkante an einer Anordnung aus einer gerichteten, quer zur Transportrichtung angeordneten, gerichteten Linienbeleuchtung 20 mit einem Wellenlängenbereich unter 400 nm, einem halbdurchlässigen Spiegel 30 und einer Zeilenkamera 18, die durch ein vorgeschaltetes optisches Sperrfilter 32 nur in dem kurzwelligen optischen Strahlenbereich der Linienbeleuchtung 20 empfindlich ist, vorbeigeführt. In einer bevorzugten Ausführungsform wird als Beleuchtungsquelle 20 eine Fluoreszenzröhre oder LEDs mit einer spektralen Emission im Bereich von ca. 360 bis ca. 400 nm verwendet und das optische Sperrfilter 32 lässt nur einen Wellenlängenbereich von ca. 350 bis 400 nm durch. Als Zeilenkamera kann eine Reihe aus CCD-Sensoren mit einer ausgewählten, in diesem Bereich noch arbeitenden Optik verwendet werden. Durch den Einsatz des halbdurchlässigen Spiegels 30 kann die Hellfeldbedingung mit einem Einfallswinkels α1 der Beleuchtung gleich und symmetrisch einem Betrachtungswinkel α2 der Kamera nahezu ideal realisiert werden. Dabei beleuchtet die gerichtete, linienförmige Beleuchtungsquelle die Oberfläche im wesentlichen senkrecht und die optische Achse der Beleuchtungsquelle schließt mit der optischen Achse der Zeilenkamera einen sehr kleinen Winkel ein, wobei durch den Spiegel die Winkel α1~α2 = 0 eingestellt werden. Man bezeichnet diesen Aufbau als autokollimatorische Anordnung von Kamera 18 und Beleuchtung 20.

Somit wird nur das kurzwellige Licht der Beleuchtungsquelle 20, welches an der Oberfläche der Möbelkante 22 spiegelnd reflektiert wird, auf die Zeilenkamera 18 abgebildet. Durch einen Reflektor 34 wird erreicht, dass die Linienbeleuchtung 20 die Möbelkante gerichtet belichtet, ein Ausschnitt 36 des Kantenprofils wird unter Hellfeld-Bedingungen von der Zeilenkamera 18 betrachtet. Durch die spektrale Verschiebung der Beleuchtung in den kurzwelligen Bereich optischer Strahlung, bzw. in den ultravioletten Bereich, wird das farblich gemusterte Dekor nicht oder nur mit sehr schwachem Kontrast abgebildet, da die Reflektion von UV-Licht an den für das menschliche Farbsehen optimierten Farbpigmenten über den gesamten Bereich der sichtbaren Farben inkl. der Farbe schwarz etwa gleich ist, d.h. im Glanzbild als ein gleichmäßig grauer Hintergrund erscheint.

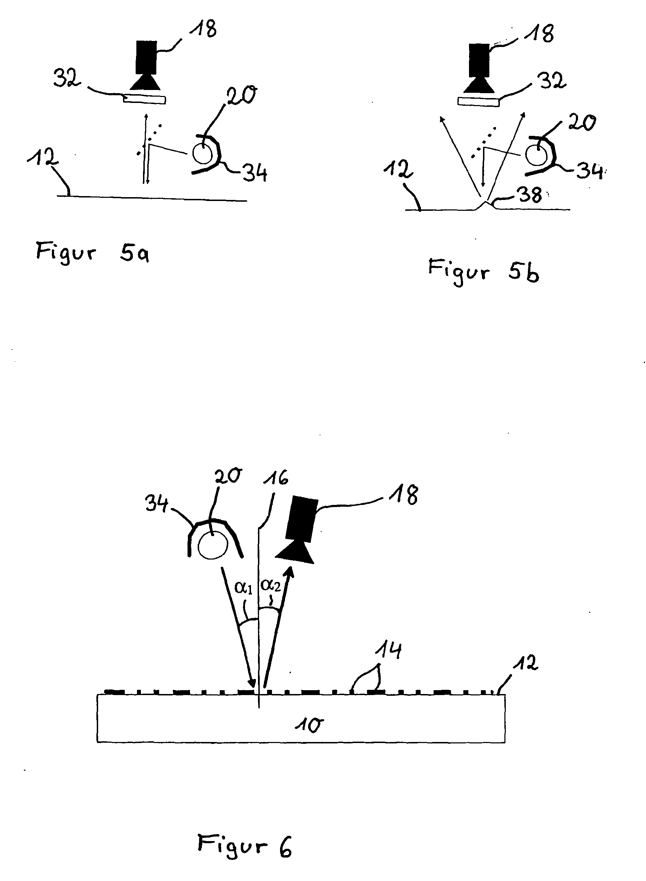

Figuren 5a und 5b zeigen jeweils ein Detail einer Oberfläche 12, beispielsweise der Möbelkante 22. Die Oberfläche wird in einer autokollimatorischen Anordnung von einer Beleuchtungsquelle 20 mit Reflektor 34 gerichtet beleuchtet und das an der Oberfläche reflektierte Licht wird in die Pupille einer Kamera 18 durch ein optisches Sperrfilter 32 hindurch geleitet. Ist die Oberfläche 12 wie in Figur 5a gezeigt ungestört, so wird das gesamte, auf die Möbelkante gerichtete UV-Licht, bzw. in einer bevorzugten Ausführungsform die kurzwellige optische Strahlung mit Wellenlängen zwischen 360 bis 400 nm, zurück in die Kamera 18 reflektiert. Die Oberfläche erscheint hell im Bild der Zeilenkamera. Ist die Oberfläche allerdings wie in Figur 5b gezeigt beispielsweise durch eine kleine Beule 38 gestört, so wird das gerichtete UV-Licht in alle Richtungen gestreut; die Oberfläche erscheint an dieser Stelle dunkel im Kamerabild.

Figur 6 zeigt, wie diese Hellfeld-Anordnung zumindest näherungsweise auch ohne den Aufwand des autokollimatorischen Spiegelsystems erreicht werden kann, indem der Winkel α1 der Beleuchtung 20 und der Winkel α2 der optischen Achse der Zeilenkamera 18 zur Oberflächennormalen 16 sehr klein und gleich gewählt werden. Typische Werte von α1~α2 sind 1 bis 5 Grad.

Es ist damit durch das erfindungsgemäße Zusammenwirken von zwei Effekten, nämlich einer Hellfeld-Anordnung von gerichteter Linienbeleuchtung und Zeilenkamera, welche im wesentlich in Richtung der Oberflächennormalen ausgerichtet ist, sowie einer Verwendung von kurzwelligem (UV-) Licht und einer ebenfalls nur für diesen Bereich empfindlichen Kamera erreicht worden, ungestörte Glanzbilder eines Ausschnittes der Möbelkante im Durchlauf zu erzielen, bei denen die störenden Einflüsse der farblichen Musterung, der Prägung und des speziellen Verlaufs der Oberflächenkrümmung auf das Zeilenkamerabild unterdrückt sind. Damit ist eine Inspektion der physikalischen Qualität solcher Oberflächen mit hoher Empfindlichkeit mit einfachen Mittel möglich.

Bei der Inspektion einer Möbelkante handelt es sich um eine Oberfläche extremer Krümmung. Auch bei der erfindungsgemäßen Unterdrückung von Störeinflüssen durch ein aufgebrachtes Farbmuster oder eine Prägung, können mit einer Linienbeleuchtung und einer Zeilenkamera keine idealen Hellfeldbedingungen für die gesamte Möbelkante erreicht werden. In einer bevorzugten Ausführungsform wird daher die Möbelkante durch drei Linienbeleuchtungen beleuchtet, die alle quer zur Transportrichtung angeordnet sind und denen jeweils eine Zeilenkamera, insgesamt also drei Zeilenkameras, zugeordnet ist. Dabei betrachtet eine Zeilenkamera die Möbelkante von schräg oben, eine Zeilenkamera betrachtet die Möbelkante von der Frontseite her und eine ist so positioniert, dass sie die Möbelkante von schräg unten betrachtet.

In einer Ausführungsform ist die Zeilenkamera, bzw. sind die Zeilenkameras, mit einer Rechnereinheit verbunden, in der von der Zeilenkamera gewonnene Bildsignale auf Unterschiede im Vergleich zu einer fehlerfreien Oberfläche analysiert werden und bei Überschreitung von Toleranzen die betreffenden Stellen der Oberfläche als fehlerhaft erkannt werden. Diese Fehler können an einer graphischen Ausgabeeinheit angezeigt und/oder in der Recheneinheit protokolliert werden. In einer weiteren Ausbildung werden die Fehler über ein Markierungssystem auf der untersuchten Oberfläche markiert. In einer Ausführungsform wird die gerichtete Linienbeleuchtung synchron zu einem Auslesetakt der Zeilenkamera stroboskopisch geschaltet.

Für eine umfassendere Inspektion der Oberfläche wird in einer bevorzugten Ausführungsform zusätzlich zur linienförmigen Beleuchtungsquelle mit kurzwelliger optischer Strahlung und der nur in diesem Wellenlängenbereich empfindlichen Zeilenkamera mindestens eine weitere, spektral unterschiedliche und diffus abstrahlend angeordnete Beleuchtung und mindestens eine weitere, das von der Oberfläche reflektierte Licht in diesem spektral unterschiedlichen Bereich empfangende Zeilenkamera installiert. Die von dieser weiteren Zeilenkamera erzeugten Bildsignale beschreiben physikalische und ästhetische Merkmale der Oberfläche, welche im Hell- und Dunkelfeld nicht sichtbar sind. Damit es zu keinen Interferenzen kommt, werden die spektral unterschiedlichen Beleuchtungsquellen und die jeweils diesen zugeordneten Zeilensensoren zu unterschiedlichen Zeitpunkten aktiviert.

Im Falle einer Dunkelfeld-Anordnung wird erfindungsgemäß die Zeilenkamera senkrecht zur Oberfläche, d.h. in Richtung der Oberflächennormalen, die zu prüfende Oberfläche erfassen, und die gerichtete UV-Beleuchtung die Oberfläche unter einem Winkel k beleuchten, wobei k so gewählt ist, dass bei einer unverletzten Oberfläche das Licht der gerichteten UV-Beleuchtung nicht in die Pupille der Zeilenkamera eintritt.

Der Erfindungsgedanke ist nicht auf dieses Beispiel der Möbelkante beschränkt. Er betrifft die Oberflächeninspektion aller möglichen insbesondere gekrümmten aber auch flachen Oberflächen, bei welchen eine Betrachtung unter gerichteter Beleuchtung, d.h. in einer Hellfeld- oder Dunkelfeld-Anordnung erforderlich ist, aber die störenden Einflüsse der Raumkrümmung, der Farbmusterung, der Prägung im von der Kamera gewonnenen Bild zu unterdrücken sind. Durch das erfindungsgemäße Verfahren sind diese Störeinflüsse nicht oder nur noch sehr schwach vorhanden.

## Patentansprüche

1. Verfahren zum Erkennen physikalischer Oberflächendefekte in farblich gemusterten bewegten Oberflächen (12) unter Hell- oder Dunkelfeldbedingung, wobei
- die Oberfläche (12) durch mindestens eine gerichtete, linienförmige Beleuchtungsquelle (20) mit kurzwelliger optischer Strahlung mit Wellenlängen unter 400 nm beleuchtet wird; und
- eine Zeilenkamera (18), die nur in dem kurzwelligen optischen Strahlenbereich empfindlich ist, den beleuchteten Oberflächenbereich unter Hell- oder Dunkelfeldbedingung abtastet,
**dadurch gekennzeichnet, dass**
die Oberfläche (12) flache und/oder räumlich gekrümmte Bereiche jeweils mit oder ohne geprägte Strukturen aufweist, und
für eine Hellfeldbedingung ein Winkel α₂ zwischen der optischen Achse der Zeilenkamera und der Oberflächennormalen (16) des beleuchteten Oberflächenbereichs einen Wert von 0° oder zwischen 1° und 5° hat, und ein Winkel α₁ zwischen der optischen Achse der gerichteten, linienförmigen Beleuchtungsquelle (20) und der Oberflächennormalen (16) des beleuchteten Oberflächenbereichs gleich und symmetrisch dem Winkel α₂ ist, oder
für eine Dunkelfeldbedingung ein Winkel α₂ zwischen der optischen Achse der Zeilenkamera und der Oberflächennormalen (16) des beleuchteten Oberflächenbereichs oder ein Winkel α₁ zwischen der optischen Achse der gerichteten, linienförmigen Beleuchtungsquelle (20) und der Oberflächennormalen (16) des beleuchteten Oberflächenbereichs einen Wert von annähernd 0° hat, und der jeweils andere Winkel α₁ bzw. α₂ um einen Winkelversatz k verschieden ist.

2. Verfahren nach Anspruch 1, wobei die kurzwellige optische Strahlung im Längenbereich von ca. 360 bis 400 nm liegt und die Zeilenkamera (18) nur den Wellenbereich von ca. 350 bis 400 nm empfängt.

3. Verfahren nach Anspruch 1 oder 2, wobei die linienhafte Beleuchtung oder die Zeilenkamera autokollimatorisch eingespiegelt werden.

4. Verfahren nach einem der vorstehenden Ansprüche, wobei die Oberfläche (12) in einer Transportrichtung bewegt wird und die Zeilenkamera (18) quer zur Transportrichtung angeordnet ist, und wobei von der Zeilenkamera (18) gewonnene Bildsignale auf einer Recheneinheit auf Unterschiede im Vergleich zu einer fehlerfreien Oberfläche analysiert werden und bei Überschreitung von Toleranzen die betreffenden Stellen der Oberfläche als fehlerhaft erkannt werden.

5. Verfahren nach einem der vorstehenden Ansprüche, wobei die gerichtete Linienbeleuchtung (20) synchron zu einem Auslesetakt der Zeilenkamera (18) stroboskopisch geschaltet wird.

6. Verfahren nach einem der vorstehenden Ansprüche, wobei zusätzlich zur linienförmigen Beleuchtungsquelle (20) mit kurzwelliger optischer Strahlung und der nur in diesem Wellenlängenbereich empfindlichen Zeilenkamera (18) mindestens eine weitere, spektral unterschiedliche und diffus abstrahlend angeordnete Beleuchtung die Oberfläche (12) beleuchtet und mindestens eine weitere Zeilenkamera das von der Oberfläche reflektierte Licht in diesem spektral unterschiedlichen Bereich empfängt und dass die erzeugten Bildsignale dieser weiteren Zeilenkamera physikalische und ästhetische Merkmale der Oberfläche beschreibt, welche im Hell- und Dunkelfeld nicht sichtbar sind.

7. Verfahren nach Anspruch 6, wobei die spektral unterschiedlichen Beleuchtungsquellen und die jeweils diesen zugeordneten Zeilensensoren zu unterschiedlichen Zeitpunkten aktiviert werden.

8. Anordnung zum Erkennen physikalischer Oberflächendefekte in farblich gemusterten bewegten Oberflächen (12) unter Hell- oder Dunkelfeldbedingung, umfassend
- eine gerichtete, linienförmige Beleuchtungsquelle (20) mit kurzwelliger optischer Strahlung mit Wellenlängen unter 400 nm zur Beleuchtung der bewegten Oberfläche (12), wobei die Beleuchtungsquelle quer zur Bewegungsrichtung angeordnet ist;
- eine Zeilenkamera (18), die nur in dem kurzwelligen optischen Strahlenbereich der Beleuchtungsquelle (20) empfindlich ist, zur Abtastung des beleuchteten Oberflächenbereichs unter Hell- oder Dunkelfeldbedingung;
- eine Recheneinheit, die die Bildsignale der Zeilenkamera empfängt und auf Oberflächenfehler auswertet,
**dadurch gekennzeichnet, dass**
die Oberfläche (12) flache und/oder räumlich gekrümmte Bereiche jeweils mit oder ohne geprägte Strukturen aufweist und
für eine Hellfeldbedingung die Zeilenkamera (18) so angeordnet ist, dass ein Winkel α₂ zwischen der optischen Achse der Zeilenkamera (18) und der Oberflächennormalen (16) des beleuchteten Oberflächenbereichs einen Wert von 0° oder zwischen 1° und 5° hat, und die gerichtete, linienförmige Beleuchtungsquelle (20) so angeordnet ist, dass ein Winkel α₁ zwischen der optischen Achse der gerichteten, linienförmigen Beleuchtungsquelle (20) und der Oberflächennormalen (16) des beleuchteten Oberflächenbereichs gleich und symmetrisch dem Winkel α₂ ist, oder
für eine Dunkelfeldbedingung die Zeilenkamera und die Beleuchtungsquelle (20) so angeordnet sind, dass ein Winkel α₂ zwischen der optischen Achse der Zeilenkamera und der Oberflächennormalen (16) des beleuchteten Oberflächenbereichs oder ein Winkel α₁ zwischen der optischen Achse der gerichteten, linienförmigen Beleuchtungsquelle (20) und der Oberflächennormalen (16) des beleuchteten Oberflächenbereichs einen Wert von annähernd 0° hat, und der jeweils andere Winkel α₁ bzw. α₂ um einen Winkelversatz k verschieden ist.

9. Anordnung nach Anspruch 8 mit mindestens einer weiteren, spektral unterschiedlichen und diffus abstrahlenden Beleuchtungsquelle und mindestens einem weiteren, das von der Oberfläche reflektierte Licht in diesem spektral unterschiedlichen Bereich empfangenden Bildsensor, wobei die Recheneinheit so ausgestaltet ist, dass sie die von diesem mindestens einen weiteren Bildsensor erzeugten Bildsignale empfangen kann und auf solche physikalischen und ästhetischen Merkmale der Oberfläche auswerten kann, welche unter der gerichteten kurzwelligen Beleuchtung im Hell- oder Dunkelfeld nicht sichtbar sind.

## Claims

1. A method of detecting physical surface defects in coloured patterned moving surfaces (12) under a bright or dark field condition,
- the surface (12) being illuminated by at least one directional, linear source of illumination (20) with short-wave optical radiation having wavelengths of less than 400 nm; and
- a line scan camera (18) that is sensitive only in the short-wave optical range of radiation scanning the illuminated surface region under a bright or dark field condition,
**characterized in that**
the surface (12) has flat and/or spatially curved regions each with or without embossed structures, and
for a bright field condition, an angle α₂ between the optical axis of the line scan camera and the surface normal (16) of the illuminated surface region has a value of 0° or of between 1° ° and 5°, and an angle α₁ between the optical axis of the directional, linear source of illumination (20) and the surface normal (16) of the illuminated surface region is equal and symmetrical to the angle α₂, or
for a dark field condition, an angle α₂ between the optical axis of the line scan camera and the surface normal (16) of the illuminated surface region or an angle α₁ between the optical axis of the directional, linear source of illumination (20) and the surface normal (16) of the illuminated surface region has a value of approximately 0°, and the respective other angle α₁ or α₂ is different by an offset angle k.

2. The method according to claim 1, in which the short-wave optical radiation is in the length range of from approx. 360 to 400 nm and the line scan camera (18) only receives the wave range of from approx. 350 to 400 nm.

3. The method according to claim 1 or 2, in which the line-type illumination or the line scan camera is mirrored in by autocollimation.

4. The method according to any of the preceding claims, in which the surface (12) is moved in a transport direction and the line scan camera (18) is arranged at right angles to the transport direction, and image signals obtained by the line scan camera (18) are analyzed on a computing unit for differences in comparison with a perfect surface and, when tolerances are exceeded, the points concerned of the surface are detected as being defective.

5. The method according to any of the preceding claims, in which the directional line illumination (20) is stroboscopically switched synchronously with a read-out clock of the line scan camera (18).

6. The method according to any of the preceding claims, in which, in addition to the linear source of illumination (20) with short-wave optical radiation and the line scan camera (18) that is sensitive only in this wavelength range, at least one further, spectrally different illumination arranged to diffusely radiate illuminates the surface (12) and at least one further line scan camera receives the light reflected by the surface in this spectrally different range, and the image signals generated by this further line scan camera describe physical and aesthetic features of the surface which are not visible in the bright and dark fields.

7. The method according to claim 6, in which the spectrally different sources of illumination and the line sensors respectively associated therewith are activated at different points in time.

8. An arrangement for detecting physical surface defects in coloured patterned moving surfaces (12) under a bright or dark field condition, comprising
- a directional, linear source of illumination (20) with short-wave optical radiation having wavelengths of less than 400 nm for illumination of the moving surface (12), the source of illumination being arranged at right angles to the direction of movement;
- a line scan camera (18) that is sensitive only in the short-wave optical range of radiation of the source of illumination (20), for scanning the illuminated surface region under a bright or dark field condition;
- a computing unit that receives the image signals of the line scan camera and analyzes them for surface defects,
**characterized in that**
the surface (12) has flat and/or spatially curved regions each with or without embossed structures, and
for a bright field condition, the line scan camera (18) is arranged such that an angle α₂ between the optical axis of the line scan camera (18) and the surface normal (16) of the illuminated surface region has a value of 0° or of between 1° and 5°, and the directional, linear source of illumination (20) is arranged such that an angle α₁ between the optical axis of the directional, linear source of illumination (20) and the surface normal (16) of the illuminated surface region is equal and symmetrical to the angle α₂, or
for a dark field condition, the line scan camera and the source of illumination (20) are arranged such that an angle α₂ between the optical axis of the line scan camera and the surface normal (16) of the illuminated surface region or an angle α₁ between the optical axis of the directional, linear source of illumination (20) and the surface normal (16) of the illuminated surface region has a value of approximately 0°, and the respective other angle α₁ or α₂ is different by an offset angle k.

9. The arrangement according to claim 8, comprising at least one further, spectrally different and diffusely radiating source of illumination and at least one further image sensor receiving the light reflected by the surface in this spectrally different range, the computing unit being configured to receive the image signals generated by this at least one further image sensor and analyze them for such physical and aesthetic features of the surface which are not visible under the directional short-wave illumination in the bright or dark field.

## Revendications

1. Procédé de détection de défauts de surface physiques dans des surfaces (12) en mouvement à motifs colorés dans une condition de fond clair ou de fond sombre,
- la surface (12) étant éclairée au moyen d'au moins une source d'éclairage (20) directionnelle linéaire avec un rayonnement optique de courte longueur d'onde avec des longueurs d'onde inférieures à 400 nm ; et
- une caméra linéaire (18) sensible uniquement dans le domaine de rayons optiques de courte longueur d'onde balayant la zone de surface éclairée dans une condition de fond clair ou de fond sombre,
**caractérisé en ce que**
la surface (12) comporte des zone plates et/ou spatialement recourbées chacune avec ou sans structures estampées, et
pour une condition de fond clair, un angle α₂ entre l'axe optique de la caméra linéaire et la normale (16) de surface sur la zone de surface éclairée a une valeur de 0° ou comprise entre 1° et 5°, et un angle α₁ entre l'axe optique de la source d'éclairage (20) directionnelle linéaire et la normale (16) de surface sur la zone de surface éclairée est identique et symétrique à l'angle α₂, ou
pour une condition de fond sombre, un angle α₂ entre l'axe optique de la caméra linéaire et la normale (16) de surface sur la zone de surface éclairée, ou un angle α₁ entre l'axe optique de la source d'éclairage (20) directionnelle linéaire et la normale (16) de surface sur la zone de surface éclairée a une valeur d'environ 0°, et l'autre angle respectif α₁ ou α₂ diffère par un décalage angulaire k.

2. Procédé selon la revendication 1, dans lequel le rayonnement optique de courte longueur d'onde se trouve dans une plage de longueurs comprise entre environ 360 et 400 nm, et la caméra linéaire (18) reçoit uniquement la gamme d'ondes comprise entre environ 350 et 400 nm.

3. Procédé selon la revendication 1 ou 2, dans lequel l'éclairage linéaire ou la caméra linéaire est reflété(e) par autocollimation.

4. Procédé selon l'une des revendications précédentes, dans lequel la surface (12) est déplacée dans un sens de transport et la caméra linéaire (18) est agencée perpendiculairement au sens de transport, et dans lequel les signaux d'image obtenus par la caméra linéaire (18) sont analysés dans une unité arithmétique en vue de différences par rapport à une surface sans défauts, et les points concernés de la surface sont détectés comme étant défectueux lors d'un dépassement de tolérances.

5. Procédé selon l'une des revendications précédentes, dans lequel l'éclairage linéaire (20) directionnel est connecté de façon stroboscopique en synchronisation avec un rythme de lecture de la caméra linéaire (18).

6. Procédé selon l'une des revendications précédentes, dans lequel additionnellement à la source d'éclairage (20) linéaire avec un rayonnement optique de courte longueur d'onde et à la caméra linéaire (18) sensible uniquement dans cette plage de longueurs d'onde, au moins un autre éclairage spectralement différent agencé de manière à rayonner de façon diffuse éclaire la surface (12), et au moins une autre caméra linéaire reçoit la lumière reflétée par la surface dans cette plage spectralement différente, et dans lequel les signaux d'image générés par cette autre caméra linéaire décrivent des caractéristiques physiques et esthétiques de la surface qui ne sont pas visibles sur le fond clair ou le fond sombre.

7. Procédé selon la revendication 6, dans lequel les sources d'éclairage spectralement différentes et les capteurs de ligne respectivement associés à celles-ci sont activés à différents moments.

8. Agencement pour la détection de défauts de surface physiques dans des surfaces (12) en mouvement à motifs colorés dans une condition de fond clair ou de fond noir, comportant
- une source d'éclairage (20) directionnelle linéaire avec un rayonnement optique de courte longueur d'onde avec des longueurs d'onde inférieures à 400 nm pour l'éclairage de la surface (12) en mouvement, la source d'éclairage étant agencée perpendiculairement au sens du mouvement ;
- une caméra linéaire (18) sensible uniquement dans le domaine de rayons optique de courte longueur d'onde de la source d'éclairage (20) pour le balayage de la zone de surface éclairée dans une condition de fond clair ou de fond sombre ;
- une unité arithmétique recevant les signaux d'image de la caméra linéaire et les évaluant en ce qui concerne des défauts de surface,
**caractérisé en ce que**
la surface (12) comporte des zone plates et/ou spatialement recourbées chacune avec ou sans structures estampées, et
pour une condition de fond clair, la caméra linéaire (18) est agencée de telle sorte qu'un angle α₂ entre l'axe optique de la caméra linéaire (18) et la normale (16) de surface sur la zone de surface éclairée a une valeur de 0° ou comprise entre 1° et 5°, et la source d'éclairage (20) directionnelle linéaire est agencée de telle sorte qu'un angle α₁ entre l'axe optique de la source d'éclairage (20) directionnelle linéaire et la normale (16) de surface sur la zone de surface éclairée est identique et symétrique à l'angle α₂, ou
pour une condition de fond sombre, la caméra linéaire et la source d'éclairage (20) sont agencées de telle sorte qu'un angle α₂ entre l'axe optique de la caméra linéaire et la normale (16) de surface sur la zone de surface éclairée ou un angle α₁ entre l'axe optique de la source d'éclairage (20) directionnelle linéaire et la normale (16) de surface sur la zone de surface éclairée a une valeur d'environ 0°, et l'autre angle respectif α₁ ou α₂ diffère par un décalage angulaire k.

9. Agencement selon la revendication 8, présentant au moins une autre source d'éclairage spectralement différente rayonnant de façon diffuse et au moins un autre capteur d'image recevant la lumière reflétée par la surface dans cette plage spectralement différente, l'unité arithmétique étant réalisée de manière à être apte à recevoir les signaux d'image générés par cet au moins un capteur d'image additionnel et à les évaluer en vue de caractéristiques physiques et esthétiques de la surface qui ne sont pas visibles sous l'éclairage directionnel de courte longueur d'onde sur le fond clair ou le fond sombre.
